(19)

Europäisches
Patentamt
European
Patent Office
Office européen
des brevets

(11) **EP 4 002 716 B1**

(12) **EUROPEAN PATENT SPECIFICATION**

(45) Date of publication and mention
of the grant of the patent:
**18.02.2026 Bulletin 2026/08**

(21) Application number: **21208011.3**

(22) Date of filing: **12.11.2021**

(51) International Patent Classification (IPC):
*H04B 7/155* (2006.01)    *H04W 56/00* (2009.01)

(52) Cooperative Patent Classification (CPC):
**H04J 3/0682; H04B 7/155; H04W 88/085**

(54) **MOBILE COMMUNICATION REPEATER AND SIGNAL SYNCHRONIZATION METHOD THEREOF**

MOBILER KOMMUNIKATIONSVERSTÄRKER UND SIGNALSYNCHRONISIERUNGSVERFAHREN DAFÜR

RÉPÉTEUR DE COMMUNICATION MOBILE ET SON PROCÉDÉ DE SYNCHRONISATION DE SIGNAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2020  KR 20200152051**
**02.09.2021  KR 20210116980**

(43) Date of publication of application:
**25.05.2022  Bulletin 2022/21**

(73) Proprietor: **SOLiD Inc.**
**Seongnam-si, Gyeonggi-do (KR)**

(72) Inventors:
• **JANG, In Ho**
**13493 Gyeonggi-do (KR)**
• **CHOI, Hyek Jae**
**13493 Gyeonggi-do (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(56) References cited:
**WO-A1-2016/185261    WO-A1-2019/066276**
**US-A1- 2017 367 061**

**Description**

**[TECHNICAL FIELD]**

The disclosure relates to a mobile communication repeater, and more particularly, to a mobile communication repeater connected to a plurality of main units and a signal synchronization method of the mobile communication repeater.

**[BACKGROUND ART]**

A distributed antenna system (DAS) is a technology used to solve high traffic capacity problems in indoor environments by spatially distributing low-output antennas. Furthermore, the DAS is a technology to solve a problem arising when there is a radio shadow section formed in a large area covered by a single antenna, by arranging low-output antennas in the area in a distributed fashion.

The DAS includes main units (MUs) and remote units (RUs). In the DAS, all the RUs perform signal synchronization to radiate the same signals at the same time. For example, the MU may transmit an arbitrary signal to a plurality of RUs, and then use 'receive acknowledgment signals' (e.g., ACK signals) received from the respective RUs to determine delay times for all the RUs to output signals at the same time (i.e., a signal delay time required for each RU to radiate a signal after receiving the signal). After this, the MU may transmit information about the delay time to each RU, which may in turn store the information about the delay time received from the MU and then radiate a signal received from the MU by delaying the signal by a time set individually. In this way, the plurality of RUs connected to the MU are able to radiate the same signal at the same time.

What are described above corresponds to a case of synchronizing signals in a DAS where an MU is connected to a plurality of RUs. On the contrary to this, there exists a DAS including a single RU (hereinafter, referred to as a shared RU) connected to a plurality of MUs. In this case where the shared RU is connected to the plurality of MUs, the MUs may be located at different places and operated by different operators. Hence, the MUs connected to the shared RU may not be connected to one another.

When the aforementioned signal synchronization method for a typical RU is applied to the shared RU, not all the plurality of MUs may be synchronized. In a time division duplexing (TDD) based mobile communication network in particular, signal synchronization between different operators is very important, and when the signal synchronization between the operators fails in the shared RU, a signal of a first operator may affect a signal of a second operator, so the communication quality of the second operator may become worse.

Accordingly, the shared RU is also required to simultaneously radiate respective signals received from the different MUs, and the same is true of uplink signals to be transmitted to the MUs.

WO 2019/066276 A1 relates to a TDD sub-system of a distributed antenna system using a time division duplexing mode. In the document, the TDD sub-system is described to comprise a reference signal detection module, a duplication module, a signal delay self-detection module, and a base station signal delay detection module.

US 2017/367061 A1 discloses a node unit which is branch-connected to another communication node via a transport medium.

**[DISCLOSURE OF INVENTION]**

**[TECHNICAL PROBLEM]**

To solve the aforementioned problem, the disclosure provides a repeater and distributed antenna system (DAS) including the repeater, capable of synchronizing and outputting signals received from different communication devices managed by different operators.

The objective of the disclosure is not limited thereto, and it is obvious to those of ordinary skill in the art that unmentioned other objectives will be clearly appreciated from the following description.

**[SOLUTION TO PROBLEM]**

The invention is defined by the appended claims.

[EFFECTS OF INVENTION]

According to embodiments of the disclosure, a repeater and signal synchronization method thereof may not only synchronize and output signals received from various main units but also perform signal synchronization with another remote unit.

[BRIEF DESCRIPTION OF DRAWINGS]

The above and other features and advantages of the disclosure will become more apparent by describing in detail exemplary embodiments thereof with reference to the attached drawings in which:

FIG. 1 is a block diagram of a mobile communication system, according to an embodiment of the disclosure;
FIG. 2 is a block diagram of a shared remote unit, according to an embodiment of the disclosure;
FIG. 3 is a block diagram of a configuration of a digital signal processor of a shared remote unit, according to an embodiment of the disclosure;
FIG. 4 illustrates a signal synchronization procedure in a mobile communication system, according to an embodiment of the present application;
FIG. 5 illustrates a configuration of a synchronization monitor and a monitoring procedure in a shared remote unit, according to an embodiment of the disclosure; and
FIG. 6 is a flowchart of a signal synchronization method in a shared remote unit, according to an embodiment of the disclosure.

[DESCRIPTION OF EMBODIMENTS]

Various modifications may be made to embodiments of the disclosure, which will be described more fully hereinafter with reference to the accompanying drawings. The disclosure may be embodied in many different forms and should not be construed as limited to the embodiments of the disclosure set forth herein; rather, these embodiments of the disclosure are provided so that the disclosure will be thorough and complete, and will fully convey the scope of the disclosure to those of ordinary skill in the art. The invention is only limited by the scope of the appended claims.

If it is determined that a detailed description of commonly-used technologies or structures related to the embodiments of the disclosure may unnecessarily obscure the subject matter of the disclosure, the detailed description will be omitted. Ordinal numbers (e.g., first, second, etc.) as herein used are to distinguish components from one another.

When the term "connected" or "coupled" is used, a component may be directly connected or coupled to another component. However, unless otherwise defined, it is also understood that the component may be indirectly connected or coupled to the other component via another new component.

The terms "unit", "device", "~er (~or)", "module", etc., refer to a processing unit of at least one function or operation, which may be implemented by hardware such as a processor, a microprocessor, a micro controller, a central processing unit (CPU), a graphics processing unit (GPU), an accelerate processor unit (APU), a digital signal processor (DSP), an application specific integrated circuit (ASIC), a field programmable gate array (FPGA), etc., software, or a combination of hardware and software.

Throughout the specification, components may be discriminated by their major functions. For example, two or more components as herein used may be combined into one, or a single component may be subdivided into two or more sub-components according to subdivided functions. Each of the components may perform its major function and further perform part or all of a function served by another component. In this way, part of a major function served by each component may be dedicated and performed by another component.

Various embodiments of the disclosure will be described one by one in detail.

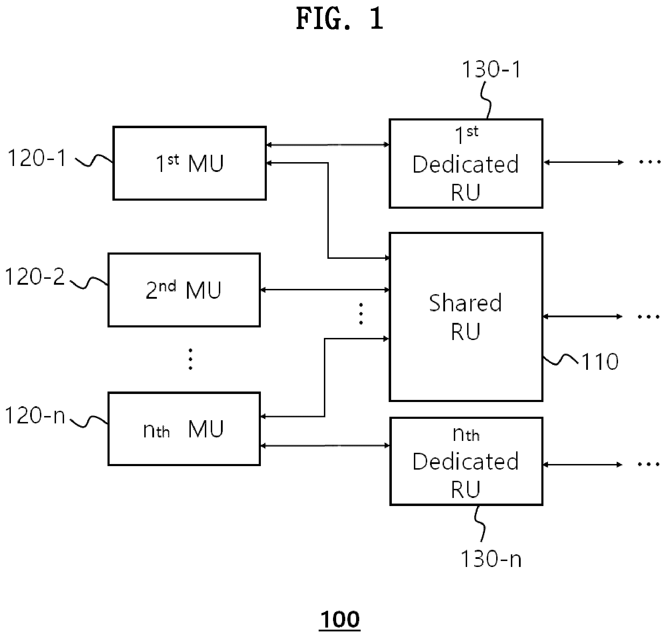

FIG. 1 is a block diagram of a mobile communication system, according to an embodiment of the disclosure.

Referring to FIG. 1, a mobile communication system 100 according to an embodiment of the disclosure may be a distributed antenna system (DAS). The mobile communication system 100 may include a shared remote unit or shared RU 110, n main units or MUs 120-1 to 120-n, and a plurality of dedicated remote units or dedicated RUs 130-1 to 130-m, where n and m are each a natural number equal to or greater than 2.

Each of the n main units 120-1 to 120-n may be connected to a base station (not shown), and may transmit downlink signals received from the base station to one or more remote units connected to the main units 120-1 to 120-n. The n main units 120-1 to 120-n may transmit uplink signals received from one or more remote units to the base station.

Furthermore, each of the main units 120-1 to 120-n may be connected to one or more of the shared remote unit 110 and the dedicated remote unit 130-1 to 130-m. For example, the first main unit 120-1 may be connected to the shared remote unit 110 and the first dedicated remote unit 130-1. In another example, the second main unit 120-2 may be connected only to the shared remote unit 110. In yet another example, the n-th main unit 120-n may be connected to the shared remote unit 110 and the m-th dedicated remote unit 130-m.

Although the main units 120-1 to 120-n are each shown in FIG. 1 as being connected to the single shared remote unit 110 and/or the single dedicated remote unit 130-1 to 130-m, the disclosure is not limited thereto. In some embodiments, one main unit may be connected to a plurality of dedicated remote units, e.g., the shared remote unit 110 or the dedicated remote unit 130-1 to 130-m may be connected to another dedicated remote unit in series. In the following description, for convenience of explanation and understanding of the disclosure, assume that one of the main units 120-1 to 120-n is connected to one shared unit 110 and one of the dedicated remote units 130-1 to 130-m in parallel.

Furthermore, a different agent or operator may manage each of the main units 120-1 to 120-n. For example, the first main unit 120-1 may be a communication device managed by operator A, the second main unit 120-2 may be a communication device managed by operator B, and the n-th main unit 120-n may be a communication device managed by operation N. Hence, direct communication between the main units 120-1 to 120-n may not be possible.

The shared remote unit 110 may be a remote device included in the mobile communication system 100 and connected to the plurality of main units 120-1 to 120-n. The shared remote unit 110 may be distinguished from the dedicated remote device 130-1 to 130-m in that the main units 120-1 to 120-n connected to the shared remote unit 110 are managed by different operators.

Even though the dedicated remote devices 130-1 to 130-m are remote devices included in the mobile communication system 100, they may each be connected to a communication device managed by the same operator unlike the shared remote unit 110. For example, the first dedicated remote device 130-1 may be connected to the first main unit 120-1, and may not be connected to the other main units 120-2 to 120-m.

In the meantime, downlink signals output from the main units 120-1 to 120-n may be synchronized and output by the remote units 110, 130-1 to 130-m connected to the main units 120-1 to 120-n. The shared remote unit 110 in particular may synchronize in a predetermined method and output the plurality of downlink signals transmitted from different locations, and simultaneously, even synchronize an output with the dedicated remote units 130-1 to 130-m connected to the main units 120-1 to 120-n. An operation of synchronizing input signals in the shared remote unit 110 will now be described in detail.

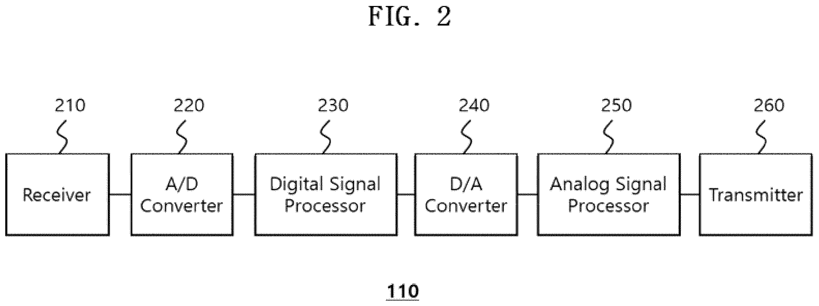

FIG. 2 is a block diagram of a shared remote unit, according to an embodiment of the disclosure.

Referring to FIG. 2, a shared remote unit 110 may include a signal receiver 210, an analog-to-digital (A/D) converter 220, a digital signal processor 230, a digital-to-analog (D/A) converter 240, an analog signal processor 250, and a signal transmitter 260.

Although the signal receiver 210 and the signal transmitter 260 are shown in FIG. 2 as being separated from each other, they may be implemented in a single device, e.g., a transceiver. The signal receiver 210 may be a device connected to the plurality of main units 120-1 to 120-n for receiving signals from the respective main units 120-1 to 120-n, the signal transmitter 260 may be a device connected to the plurality of main units 120-1 to 120-n for transmitting signals to the respective main units 120-1 to 120-n, and the signal receiver 210 and the signal transmitter 260 may be combined into a transceiver.

As many signal receivers 210 and/or signal transmitters 260 as the number of main units 120-1 to 120-n may be included in the shared remote unit 110. For example, when n main units 120-1 to 120-n are connected to the shared remote unit 110, there may be n signal receivers 210 and/or n signal transmitters 260 included in the shared remote unit 110.

A signal received from each of the main units 120-1 to 120-n may be an optical signal. In this case, the signal receiver 210 and/or the signal transmitter 260 may be implemented as a device capable of receiving and/or transmitting the optical signal.

The signal transmitter 260 may be configured to include an antenna for radiating a radio signal to the outside.

When a signal received from each of the main units 120-1 to 120-n is an analog signal, the A/D converter 220 may convert the received analog signal to a digital signal. On the other hand, when the signal received from each of the main units 120-1 to 120-n is a digital signal, the A/D converter 220 may not be included in the shared remote unit 110.

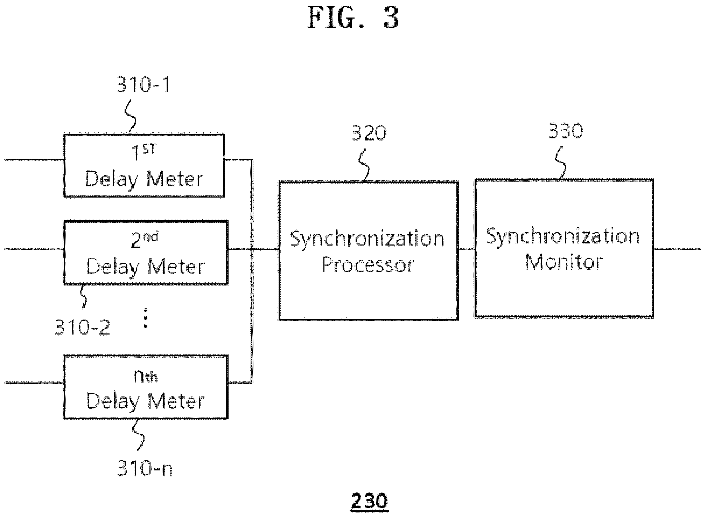

The digital signal processor 230 may be configured to process an input digital signal and may synchronize and output signals received from the main units 120-1 to 120-n in a predetermined method. The operation of the digital signal processor 230 will be described later in connection with FIG. 3.

The D/A converter 240 may be configured to convert a signal processed by the digital signal processor 230 to an analog signal. The analog signal processor 250 may be configured to process an analog signal, and may include an amplifier. For example, the analog signal processor 250 may include an analog signal amplifier configured to amplify and output an input analog signal with a preset gain. The analog signal processor 250 may not be included in the shared remote device 110 in a case that there is no need for analog processing such as amplifying a digitally processed signal.

In a case that the shared remote device 110 is configured to output a digital signal, the shared remote device 110 may not include the D/A converter 240 and the analog signal processor 250.

A signal synchronization operation of the digital signal processor 230 will now be described in detail in connection with FIGS. 3 to 5.

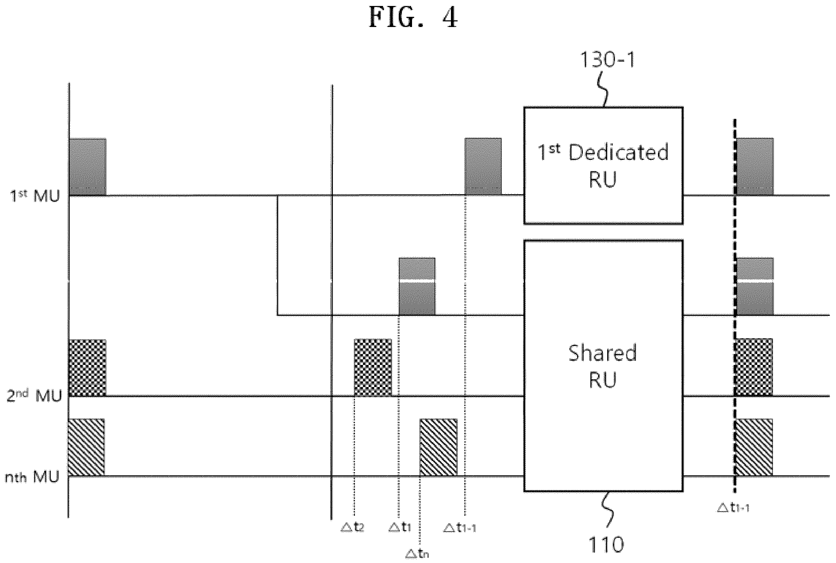

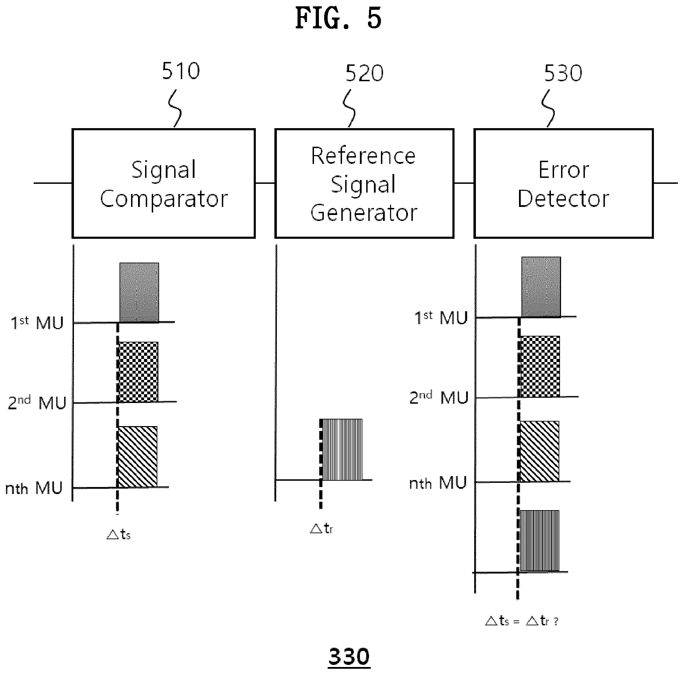

FIG. 3 is a block diagram of a configuration of a digital signal processor of a shared remote unit, according to an embodiment of the disclosure, FIG. 4 illustrates a signal synchronization procedure in a mobile communication system, according to an embodiment of the present application, and FIG. 5 illustrates a configuration of a synchronization monitor and a monitoring procedure in a shared remote unit, according to an embodiment of the disclosure.

Referring to FIG. 3, the digital signal processor 230 may include n delay meters 310-1 to 310-n, a synchronization processor 320, and a synchronization monitor 330.

In the following description, assume an occasion when the signal receiver 210 connected to the n main units 120-1 to 120-n receives n test signals and the n test signals are converted to digital signals, which is in turn entered to the digital signal processor 230.

The n delay meters 310-1 to 310-n may measure delays of the test signals received from the n main units 120-1 to 120-n. For example, the first delay meter 310-1 may measure a delay time of a first test signal (referred to as a first delay time) received from the first main unit 120-1. Likewise, the n-th delay meter 310-n may measure a delay time of an n-th test signal (referred to as an n-th delay time) received from the n-th main unit 120-n. How the delay meters 310-1 to 310-n each measure the delay time may be almost the same as a method that is already known to the public, so details thereof will be omitted.

The n delay times measured by the delay meters 310-1 to 310-n may be stored in a memory (not shown) equipped therein, and the n delay times may be used for comparison to synchronize downlink signals.

In the meantime, the n delay times measured by the delay meters 310-1 to 310-n may be transmitted to their respective main units 120-1 to 120-n. The main units 120-1 to 120-n may thus recognize how much their respective test signals transmitted are delayed, i.e., delay times of the test signals transmitted to the shared remote unit 110. Specifically, the first main unit 120-1 may receive the first delay time and recognize a delay time of the signal between the first main unit 120-1 and the shared remote unit 110. Furthermore, when the first main unit 120-1 transmits a test signal to the shared remote unit 110, it may also transmit the test signal to the first dedicated remote unit 130-1, receive a response signal (e.g., an ACK signal) from the first dedicated remote unit 130-1 that has received the test signal, and recognize a delay time for the first dedicated remote unit 130-1. The first main unit 120-1 may generate information (hereinafter, referred to as first delay information) including information about the delay time for the first dedicated remote unit 130-1 and/or information about a delay time for the shared remote unit 110. The first main unit 120-1 may transmit the first delay information to the shared remote unit 110 and/or the first dedicated remote unit 130-1.

Accordingly, the shared remote unit 110 may also recognize a delay time between the first dedicated remote unit 130-1 and the first main unit 120-1. The shared remote unit 110 may recognize and store the following information in a memory (not shown):

(1) a delay time between the first main unit 120-1 and the shared remote unit 110, i.e., a first shared delay time
(2) a delay time between the n-th main unit 120-n and the shared remote unit 110, i.e., an n-th shared delay time
(3) a delay time between the first main unit 120-1 and the first dedicated remote unit 130-1, i.e., a first dedicated delay time
(4) a delay time between the n-th main unit 120-n and the m-th dedicated remote unit 130-m, i.e., an n-th dedicated delay time (on the assumption that m=n).

The synchronization processor 320 may use the plurality of shared delay times and/or the plurality of dedicated delay times to synchronize input downlink signals. For example, the synchronization processor 320 may generate delay information based on the longest of the plurality of shared delay times and the plurality of dedicated delay times.

Specifically, assume a case that the first shared delay time is 0.11 msec, the second shared delay time is 0.05 msec, the n-th shared delay time is 0.15 msec, and the first dedicated delay time is 0.20 msec. In this case, the synchronization processor 320 may generate sync times for delaying the remaining downlink times based on the first dedicated delay time, which is the longest delay time. The synchronization processor 320 may apply a delay time of 0.09 msec to a signal received from the first main unit 120-1, a delay time of 0.15 msec to a signal received from the second main unit 120-2, and a delay time of 0.05 msec to a signal received from the n-th main unit 120-n. The synchronization processor 320 may generate a sync time corresponding to each main unit 120-1 to 120-n in the following equation:

n-th sync time = the longest delay time - the n-th shared delay time (or the n-th dedicated delay time)

The synchronization processor 320 may synchronize the downlink signal according to the generated sync time. In other words, the synchronization processor 320 may synchronize future input downlink signals by applying n sync times generated upon reception of the test signals to the future input downlink signals. The synchronization processor 320 may delay the first downlink signal (i.e., a downlink signal received from the first main unit 120-1) by applying the first sync time to the first downlink signal and delay the n-th downlink signal by applying the n-th sync time to the n-th downlink signal. Accordingly, the first to n-th downlink signals may all be synchronized and then output to the outside, and not only synchronization of the downlink signals entered to the shared remote unit 110 but also synchronization with the other dedicated remote units 130-1 to 130-m may be done. It is because the delay times for the dedicated remote units 130-1 to 130-m are also considered to create the sync information.

Referring to FIG. 4, shown is an occasion when the first downlink signal is transmitted from the first main unit 130-1 to the first dedicated remote unit 130-1 and the shared remote unit 110, the second downlink signal is transmitted from the second main unit 130-2 to the shared remote unit 110, and the n-th downlink signal is transmitted from the n-th main unit 120-n to the shared remote unit 110. In this case, it is shown that the first shared delay time is $\triangle t1$, the first dedicated delay time is $\triangle t1-1$, the second shared delay time is $\triangle t2$, and the n-th shared delay time is $\triangle tn$.

The shared remote unit 110, especially the synchronization processor 320 may delay the respective downlink signals with respect to the n sync times generated based on the longest of the delay times. Accordingly, synchronized signals may be output from the shared remote unit 110 and the first dedicated remote unit 130-1.

Turning back to FIG. 3, the synchronization monitor 330 may determine whether there is an error in the signal synchronized and output by the synchronization processor 320.

Referring to FIG. 5, the synchronization monitor 330 may include a signal comparator 510, a reference signal generator 520, and an error detector 530.

The signal comparator 510 may compare n downlink signals differently delayed by the synchronization processor 320 to determine whether there is a difference. For example, the signal comparator 510 may determine whether the n downlink signals are delayed the same as a reference signal is delayed. In the example of FIG. 5, the signal comparator 510 may determine whether the first to n-th downlink signals are differentially delayed but finally delayed by the same amount of time $\triangle ts$ as compared to the reference time.

The reference signal generator 520 may use a digital clock equipped therein to generate the reference signal that corresponds to a signal verified by passing the signal comparator 510. In other words, the reference signal generator 520 may generate and output the reference signal delayed by the same amount of time $\triangle tr$ as compared to a reference time.

The error detector 530 may compare the signal verified by passing the signal comparator 510 with the reference signal generated by the reference signal generator 520 to determine whether the same amount of delay is maintained, i.e., $\triangle ts = \triangle tr$. When it is determined that the same amount of delay is not maintained in both the signal and the reference signal, the error detector 530 may output an alarm sound, display an alarm screen, or transmit an alarm message to a terminal of a manager, such as a personal computer or a mobile communication terminal.

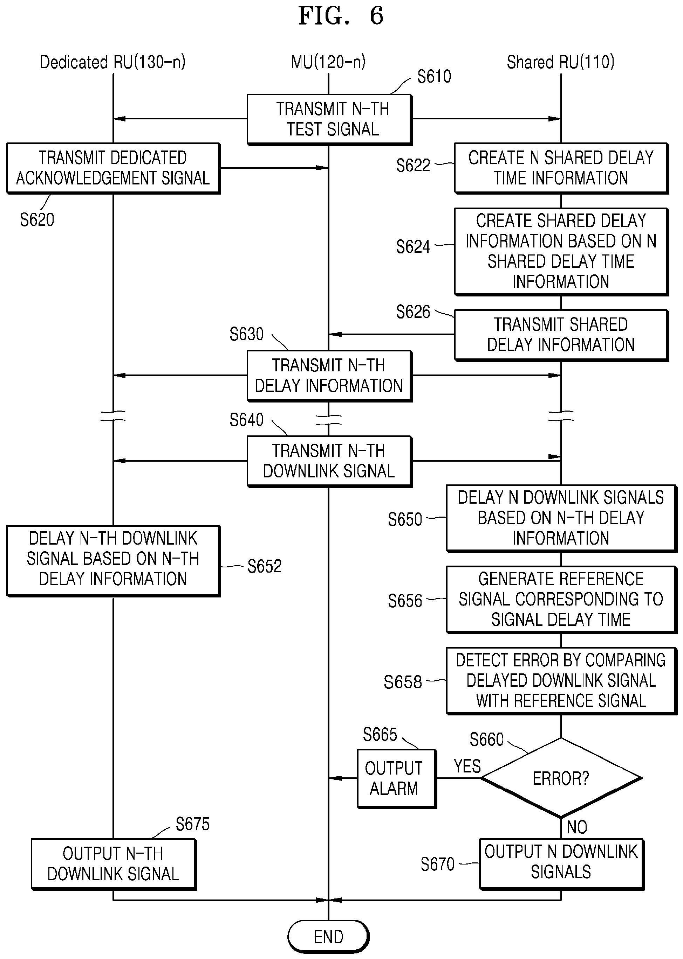

FIG. 6 is a flowchart of a signal synchronization method in a shared remote unit, according to an embodiment of the disclosure.

In the following description, a signal synchronization method in the shared remote unit 110 will be summarized again. Operations, as will be described below, may be performed by the components of the shared remote unit 110 as described above in connection with FIGS. 2 to 5, but for convenience of explanation and understanding of the disclosure, they will be described as being performed collectively by the shared remote unit 110.

The main units 120-1 to 120-n connected to the shared remote unit 110 may generate the delay information by considering delay times for the other dedicated remote units 130-1 to 130-m connected to the main units 120-1 to 120-n, in which case the shared remote unit 110 receives signals from the plurality of main units 120-1 to 120-n and are required to create delay information by considering all delay times for the plurality of main units 120-1 to 120-n.

In the following description, for the sake of easy understanding, assume a DAS system including one shared remote unit 110 and one dedicated remote unit 130-m.

First, in operation S610, the n-th main unit 120-n generates and transmits the n-th test signal to the shared remote unit 110 and the dedicated remote unit 130-m.

In operation S620, the dedicated remote unit 130-m generates a dedicated acknowledgment signal (e.g., an ACK signal) in response to reception of the n-th test signal and transmits the dedicated acknowledgment signal to the n-th main unit 120-n.

In operation S622, the shared remote unit 110 generates n pieces of shared delay time information in response to reception of the first to n-th test signals from the first to n-th main units 120-1 to 120-n. Specifically, the first shared delay time information may be information about a delay time of the first test signal, and the n-th shared delay time information may be information about a delay time of the n-th test signal.

In operation S624, the shared remote unit 110 creates shared delay information using the n pieces of shared delay time information. For example, the shared remote unit 110 may create one of the n pieces of shared delay time information having the longest delay time as the shared delay information.

In operation S626, the shared remote unit 110 transmits the shared delay information to the n-th main unit 120-n.

In operation S630, the n-th main unit 120-n creates the n-th delay information based on the dedicated acknowledgment signal and the shared delay information. For example, the n-th main unit 120-n may recognize a delay time for the n-th dedicated remote unit 130-m through the dedicated acknowledgment signal, recognize a delay time for the shared remote unit 110 through the shared delay information, and create the n-th delay information for synchronizing all the signals based on the longest of the delay times. Subsequently, the n-th main unit 120-n may transmit the n-th delay information to the shared remote unit 110 and/or the m-th dedicated remote unit 130-m.

The shared remote unit 110 and/or the m-th dedicated remote unit 130-m may receive and store the n-th delay information. The shared remote unit 110 in particular may recognize information about a delay time for the m-th dedicated remote unit 130-m through the n-th delay information. In this way, the shared remote unit 110 may generate sync times corresponding to n downlink signals, respectively.

In operation S640, the n-th main unit 120-n generates and transmits the n-th downlink signal to the m-th dedicated remote unit 130-m and the shared remote unit 110.

In operation S650, the shared remote unit 110 delays the n downlink signals based on the n-th delay information. For example, the shared remote unit 110 may delay the n downlink signals by their respective sync times to correspond to the n-th delay information.

In operation S652, the m-th dedicated remote unit 130-m delays the n-th downlink signal based on the n-th delay information. Specifically, the m-th dedicated remote unit 130-m may delay the n-th downlink signal by an amount of time corresponding to the n-th delay information.

In operation S656, the shared remote unit 110 generates a reference signal corresponding to the delay time of the n downlink signals.

In operation S658, the shared remote unit 110 may compare the n delayed downlink signals with the reference signal to detect errors.

When detecting an error in operation S660, the shared remote unit 110 outputs an alarm sound or transmits a message to an administrator's terminal in a predetermined method in operation S665.

The shared remote unit 110 outputs n synchronized downlink signals in operation S670, and simultaneously, the m-th dedicated remote unit 130-m also outputs the n-th downlink signal in operation S675.

Embodiments of the disclosure have thus far been described on the assumption that the mobile communication network 100 is a DAS including the main units 120-1 to 120-n managed by many different operators, the dedicated remote units 130-1 to 130-m, and the shared remote unit 110. Embodiments of the disclosure are not, however, limited to the DAS.

Accordingly, embodiments of the disclosure may be applied to any type of mobile communication networks in which (1) there is a single second communication device connected to multiple first communication devices, (2) the first communication devices may be managed by different operators and may not be connected to one another, and (3) the first communication devices may be connected to one or more third communication devices.

**Claims**

1. A mobile communication repeater (110) comprising:

   a receiver (210) configured to receive a plurality of test signals from a plurality of external communication devices (120-1, 120-2, ..., 120-n) and subsequently, receive a plurality of downlink signals from the external communication devices (120-1, 120-2, ..., 120-n); and
   a digital signal processor (230) configured to measure a delay time of each of the plurality of test signals, generate sync times , each corresponding to each external communication device, to synchronize the plurality of downlink signals based on the delay times, and delay each of the plurality of downlink signals based on the sync times.

2. The mobile communication repeater (110) of claim 1, wherein the digital signal processor (230) is configured to generate the sync times based on the longest of the delay times of the plurality of test signals.

3. The mobile communication repeater (110) of claim 1, wherein the receiver (210) is configured to receive delay information from each of the plurality of external communication devices (120-1, 120-2, ..., 120-n), and
   wherein the digital signal processor (230) is configured to delay the downlink signals by taking into account a delay time of each of the plurality of external communication devices (120-1, 120-2, ..., 120-n) included in the delay information.

4. The mobile communication repeater (110) of claim 3, wherein the digital signal processor (230) is configured to perform the delaying so that the downlink signals from the plurality of external communication devices (120-1, 120-2, ..., 120-n) are synchronized and output.

5. The mobile communication repeater (110) of claim 3, wherein the digital signal processor (230) is configured to generate a reference signal corresponding to the delaying, and detect errors by comparing the reference signal with the delayed downlink signals.

6. The mobile communication repeater (110) of claim 1, wherein the plurality of external communication devices (120-1, 120-2, ..., 120-n) are communication devices operated by different managers.

7. A signal synchronization method performed by a mobile communication repeater connected to a plurality of external communication devices, the signal synchronization method comprising:

receiving a plurality of test signals from the external communication devices;

measuring a delay time of each of the plurality of test signals;

generating sync times , each corresponding to each external communication device, to synchronize the plurality of downlink signals based on the delay times;

receiving a plurality of downlink signals from the external communication devices; and

initially delaying each of the plurality of downlink signals based on the sync times.

8. The signal synchronization method of claim 7, wherein the generating of the sync times comprises generating the sync times based on the longest of the delay times of the plurality of test signals.

9. The signal synchronization method of claim 7, further comprising:

receiving delay information from each of the plurality of external communication devices; and

secondly delaying the downlink signals by taking into account a delay time of each of the plurality of external communication devices included in the delay information.

10. The signal synchronization method of claim 9, wherein the secondly delaying comprises performing the secondary delaying so that the downlink signals from the plurality of external communication devices are synchronized and output.

11. The signal synchronization method of claim 9, further comprising:

generating a reference signal corresponding to the secondary delaying; and

detecting errors by comparing the reference signal with the secondly delayed downlink signals.

12. The signal synchronization method of claim 7, wherein the plurality of external communication devices are communication devices operated by different managers.


**Patentansprüche**

1. Mobilkommunikationsverstärker (110), umfassend:

einen Empfänger (210), der dazu eingerichtet ist, eine Mehrzahl von Testsignalen von einer Mehrzahl von externen Kommunikationsvorrichtungen (120-1, 120-2, ..., 120-n) zu empfangen und anschließend eine Mehrzahl von Downlink-Signalen von den externen Kommunikationsvorrichtungen (120-1, 120-2, ..., 120-n) zu empfangen; und

einen digitalen Signalprozessor (230), der dazu eingerichtet ist, eine Verzögerungszeit jedes der Mehrzahl von Testsignalen zu messen, Synchronisierungszeiten zu erzeugen, die jeweils jeder externen Kommunikationsvorrichtung entsprechen, um die Mehrzahl von Downlink-Signalen basierend auf den Verzögerungszeiten zu synchronisieren, und jedes der Mehrzahl von Downlink-Signalen basierend auf den Synchronisierungszeiten zu verzögern.

2. Mobilkommunikationsverstärker (110) nach Anspruch 1, wobei der digitale Signalprozessor (230) dazu eingerichtet ist, die Synchronisierungszeiten basierend auf der längsten der Verzögerungszeiten der Mehrzahl von Testsignalen zu erzeugen.

3. Mobilkommunikationsverstärker (110) nach Anspruch 1, wobei der Empfänger (210) dazu eingerichtet ist, Verzögerungsinformationen von jeder der Mehrzahl von externen Kommunikationsvorrichtungen (120-1, 120-2, ..., 120-n) zu empfangen, und

wobei der digitale Signalprozessor (230) dazu eingerichtet ist, die Downlink-Signale unter Berücksichtigung einer Verzögerungszeit jeder der Mehrzahl von externen Kommunikationsvorrichtungen (120-1, 120-2, ..., 120-n), die in den Verzögerungsinformationen enthalten ist, zu verzögern.

4. Mobilkommunikationsverstärker (110) nach Anspruch 3, wobei der digitale Signalprozessor (230) dazu eingerichtet ist, das Verzögern so durchzuführen, dass die Downlink-Signale von der Mehrzahl von externen Kommunikationsvorrichtungen (120-1, 120-2, ..., 120-n) synchronisiert und ausgegeben werden.

**5.** Mobilkommunikationsverstärker (110) nach Anspruch 3, wobei der digitale Signalprozessor (230) dazu eingerichtet ist, ein Referenzsignal zu erzeugen, das dem Verzögern entspricht, und Fehler durch Vergleichen des Referenzsignals mit den verzögerten Downlink-Signalen zu erkennen.

**6.** Mobilkommunikationsverstärker (110) nach Anspruch 1, wobei die Mehrzahl von externen Kommunikationsvorrichtungen (120-1, 120-2, ..., 120-n) Kommunikationsvorrichtungen sind, die von unterschiedlichen Verwaltern betrieben werden.

**7.** Signalsynchronisierungsverfahren, das von einem Mobilkommunikationsverstärker durchgeführt wird, der mit einer Mehrzahl von externen Kommunikationsvorrichtungen verbunden ist, wobei das Signalsynchronisierungsverfahren Folgendes umfasst:

Empfangen einer Mehrzahl von Testsignalen von den externen Kommunikationsvorrichtungen;
Messen einer Verzögerungszeit jedes der Mehrzahl von Testsignalen;
Erzeugen von Synchronisierungszeiten, die jeweils jeder externen Kommunikationsvorrichtung entsprechen, um die Mehrzahl von Downlink-Signalen basierend auf den Verzögerungszeiten zu synchronisieren;
Empfangen einer Mehrzahl von Downlink-Signalen von den externen Kommunikationsvorrichtungen; und
anfängliches Verzögern jedes der Mehrzahl von Downlink-Signalen basierend auf den Synchronisierungszeiten.

**8.** Signalsynchronisierungsverfahren nach Anspruch 7, wobei das Erzeugen der Synchronisierungszeiten Folgendes umfasst:
Erzeugen der Synchronisierungszeiten basierend auf der längsten der Verzögerungszeiten der Mehrzahl von Testsignalen.

**9.** Signalsynchronisierungsverfahren nach Anspruch 7, weiterhin umfassend:

Empfangen von Verzögerungsinformationen von jeder der Mehrzahl von externen Kommunikationsvorrichtungen; und
zweites Verzögern der Downlink-Signale unter Berücksichtigung einer Verzögerungszeit jeder der Mehrzahl von externen Kommunikationsvorrichtungen, die in den Verzögerungsinformationen enthalten ist.

**10.** Signalsynchronisierungsverfahren nach Anspruch 9, wobei das zweite Verzögern Folgendes umfasst:
Durchführen des zweiten Verzögerns, sodass die Downlink-Signale von der Mehrzahl von externen Kommunikationsvorrichtungen synchronisiert und ausgegeben werden.

**11.** Signalsynchronisierungsverfahren nach Anspruch 9, weiterhin umfassend:

Erzeugen eines Referenzsignals, das dem zweiten Verzögern entspricht; und
Erkennen von Fehlern durch Vergleichen des Referenzsignals mit den dem zweiten Verzögern unterzogenen Downlink-Signalen.

**12.** Signalsynchronisierungsverfahren nach Anspruch 7, wobei die Mehrzahl von externen Kommunikationsvorrichtungen Kommunikationsvorrichtungen sind, die von unterschiedlichen Verwaltern betrieben werden.

**Revendications**

**1.** Répétiteur de communication mobile (110) comprenant:

un récepteur (210) configuré pour recevoir une pluralité de signaux de test provenant d'une pluralité de dispositifs de communication externes (120-1, 120-2, ..., 120-n) et, puis, pour recevoir une pluralité de signaux descendants provenant des dispositifs de communication externes (120-1, 120-2, ..., 120-n); et
un processeur de signal numérique (230) configuré pour mesurer un temps de retard de chacun de la pluralité de signaux de test, générer des temps de synchronisation, chacun correspondant à chaque dispositif de communication externe, afin de synchroniser la pluralité de signaux descendants sur la base des temps de retard, et retarder chacun de la pluralité de signaux descendants sur la base des temps de synchronisation.

**2.** Répétiteur de communication mobile (110) selon la revendication 1, dans lequel le processeur de signal numérique (230) est configuré pour générer les temps de synchronisation sur la base du plus long des temps de retard de la pluralité de signaux de test.

3. Répétiteur de communication mobile (110) selon la revendication 1, dans lequel le récepteur (210) est configuré pour recevoir des informations de retard provenant de chacun de la pluralité des dispositifs de communication externes (120-1, 120-2, ..., 120-n), et
dans lequel le processeur de signal numérique (230) est configuré pour retarder les signaux descendants en tenant compte d'un temps de retard de chacun de la pluralité de dispositifs de communication externes (120-1, 120-2, ..., 120-n) inclus dans les informations de retard.

4. Répétiteur de communication mobile (110) selon la revendication 3, dans lequel le processeur de signal numérique (230) est configuré pour procéder au retard de manière à ce que les signaux descendants provenant de la pluralité de dispositifs de communication externes (120-1, 120-2, ..., 120-n) soient synchronisés et émis.

5. Répétiteur de communication mobile (110) selon la revendication 3, dans lequel le processeur de signal numérique (230) est configuré pour générer un signal de référence correspondant au retard, et détecter les erreurs en comparant le signal de référence avec les signaux descendants retardés.

6. Répétiteur de communication mobile (110) selon la revendication 1, dans lequel la pluralité des dispositifs de communication externes (120-1, 120-2, ..., 120-n) sont des dispositifs de communication exploités par différents gestionnaires.

7. Procédé de synchronisation de signal exécuté par un répétiteur de communication mobile connecté à une pluralité de dispositifs de communication externes, le procédé de synchronisation de signal comprenant:

   la réception d'une pluralité de tests provenant des dispositifs de communication externes;
   la mesure d'un temps de retard de chacun de la pluralité des signaux de test;
   la génération de temps de synchronisation, chacun correspondant à chaque dispositif de communication externe, pour synchroniser la pluralité de signaux descendants sur la base des temps de retard;
   la réception d'une pluralité de signaux descendants provenant des dispositifs de communication externes; et
   le retard initial de chacun de la pluralité des signaux descendants sur la base des temps de synchronisation.

8. Procédé de synchronisation de signal selon la revendication 7, dans lequel la génération des temps de synchronisation consiste à:
   générer les temps de synchronisation sur la base du plus long temps parmi les temps de retard de la pluralité des signaux de test.

9. Procédé de synchronisation de signal selon la revendication 7, comprenant en outre:

   la réception des informations de retard provenant de chacun de la pluralité des dispositifs de communication externes; et
   le retard, en second lieu, des signaux descendants en tenant compte d'un temps de retard de chacun de la pluralité de dispositifs de communication externes inclus dans les informations de retard.

10. Procédé de synchronisation de signal selon la revendication 9, dans lequel le deuxième retard consiste à procéder au retard en second lieu de sorte que les signaux descendants provenant de la pluralité des dispositifs de communication externes soient synchronisés et émis.

11. Procédé de synchronisation de signal selon la revendication 9, comprenant en outre:

   la génération d'un signal de référence correspondant au deuxième retard; et
   la détection d'erreurs en comparant le signal de référence aux signaux descendants retardés en second lieu.

12. Procédé de synchronisation de signal selon la revendication 7, dans lequel la pluralité des dispositifs de communication externes sont des dispositifs de communication exploités par différents gestionnaires.

# FIG. 1

100

## FIG. 2

| 210 | 220 | 230 | 240 | 250 | 260 |
|---|---|---|---|---|---|
| Receiver | A/D Converter | Digital Signal Processor | D/A Converter | Analog Signal Processor | Transmitter |

110

FIG. 3

## FIG. 4

EP 4 002 716 B1

# FIG. 5

510

520

530

| Signal Comparator | Reference Signal Generator | Error Detector |

1st MU

2nd MU

nth MU

$\triangle t_s$

$\triangle t_r$

1st MU

2nd MU

nth MU

$\triangle t_s = \triangle t_r$ ?

330

# FIG. 6

| Dedicated RU(130-n) | MU(120-n) | Shared RU(110) |
|---|---|---|

S610 — TRANSMIT N-TH TEST SIGNAL

TRANSMIT DEDICATED ACKNOWLEDGEMENT SIGNAL — S620

S622 — CREATE N SHARED DELAY TIME INFORMATION

S624 — CREATE SHARED DELAY INFORMATION BASED ON N SHARED DELAY TIME INFORMATION

S626 — TRANSMIT SHARED DELAY INFORMATION

S630 — TRANSMIT N-TH DELAY INFORMATION

S640 — TRANSMIT N-TH DOWNLINK SIGNAL

S650 — DELAY N DOWNLINK SIGNALS BASED ON N-TH DELAY INFORMATION

DELAY N-TH DOWNLINK SIGNAL BASED ON N-TH DELAY INFORMATION — S652

S656 — GENERATE REFERENCE SIGNAL CORRESPONDING TO SIGNAL DELAY TIME

S658 — DETECT ERROR BY COMPARING DELAYED DOWNLINK SIGNAL WITH REFERENCE SIGNAL

S665 — OUTPUT ALARM

S660 — ERROR?  YES / NO

S675 — OUTPUT N-TH DOWNLINK SIGNAL

S670 — OUTPUT N DOWNLINK SIGNALS

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019066276 A1

- US 2017367061 A1